# EUROPÄISCHE PATENTSCHRIFT

(11) **EP 0 648 966 B1**
(45) Veröffentlichungstag und Bekanntmachung des Hinweises auf die Patenterteilung: **02.09.1998**
(21) Anmeldenummer: 94890137.6
(22) Anmeldetag: 30.08.1994
(51) Int. Cl.: F16L 9/12, F16L 1/11, F16L 47/02

(54) **Schweissbares Kunststoffrohr, insbesondere für Gas- und Flüssigkeitsleitungen**
Weldable plastic pipe, especially for gas and fluid conduits
Tuyau soudable en matière plastique notamment pour des conduits de gaz et fluide

(30) Priorität: 02.09.1993 AT 1765/93
(43) Veröffentlichungstag der Anmeldung: 19.04.1995
(73) Patentinhaber: KE-KELIT Kunststoffwerk Gesellschaft m.b.H., A-4017 Linz (AT)
(72) Erfinder: Rametsteiner, Karl, A-4040 Linz (AT)
(74) Vertreter: Hübscher, Heiner, Dipl.-Ing.

(56) Entgegenhaltungen:
- EP-A- 0 010 835
- DE-A- 3 346 954
- FR-A- 1 552 682
- GB-A- 2 200 969
- US-A- 4 699 838
- US-A- 5 051 034

## Beschreibung

Die Erfindung bezieht sich auf ein schweißbares Kunststoffrohr, insbesondere für Gas- und Flüssigkeitsleitungen, das oberflächlich zumindest einen elektrophysikalisch ortbaren Längsstreifen, vorzugsweise aus Metall, aufweist, wobei der Längsstreifen von der Rohroberfläche durch eine Unterlage distanziert ist, siehe Z.B. FR-A- 1 552 682.

Leitungsrohre dieser Art werden meist in Wänden unter Putz verlegt oder auch in Böden eingebracht. Sobald das Rohr verlegt ist und exakte Aufzeichnungen über die Rohranordnungen fehlen, ist es bei einfachen Kunststoffrohren praktisch unmöglich, den genauen Rohrverlauf nachträglich zu bestimmen.Um hier Abhilfe zu schaffen, sind diese Kunststoffrohre mit dem elektrophysikalisch ortbaren Längsstreifen od. dgl. versehen. Nun müssen aber die Kunststoffrohre untereinander oder mit einer Muffe, einer Armatur od. dgl. verschweißt werden, wobei der vorgesehene Längsstreifen am zu schweißenden Rohrende abgelöst werden muß, um eine homogene Schweißnaht zu erzielen und zumindest auf die Dauer Leckstellen in der Verbindungsmuffe mit Sicherheit zu vermeiden, da der metallische oder sonstige Längsstreifen die Schweißung zumindest partiell verhindert und dort durch Korrosionsschäden od. dgl. Beschädigungen auftreten können. Das Ablösen der Längsstreifen stellt aber auch eine zusätzliche und manchmal schwierige bzw. zeitaufwendige Arbeit dar.

Somit liegt der Erfindung die Aufgabe zugrunde, diesen Nachteil zu beseitigen und ein Kunststoffrohr der eingangs geschilderten Art zu schaffen, das bei der Verschweißung mit einer Muffe od. dgl. hinsichtlich der Längsstreifen nicht besonders bearbeitet zu werden braucht.

Die Erfindung löst die gestellte Aufgabe dadurch, daß die Dicke der Unterlage mindestens 0,5 mm, vorzugsweise 2 bis 3 mm, beträgt, so daß der Gesamtdurchmesser des Kunststoffrohres im Bereich dieses Längsstreifens den Innendurchmesser einer Heizmuffe zur nachfolgenden Fusionsschweißung übersteigt.

Wird am Ende eines erfindungsgemäßen Kunststoffrohres eine übliche Heizmuffe zur Fusionsschweißung aufgebracht, so wird der Längs- bzw. Metallstreifen samt der Unterlage zwangsweise zurückgeschoben, weil ja der Innendurchmesser der Heizmuffe kleiner als der Gesamtdurchmesser des Kunststoffrohres im Längsstreifenbereich ist. Es braucht also hinsichtlich des Längsstreifens nichts weiter untermommen zu werden, und es kann die Fusionsschweißung wie bei unbeschichteten Kunststoffrohren durchgeführt werden. Es erübrigt sich also ein zusätzlicher Arbeitsgang vor dem Schweißen.

Die Unterlage kann, wie Versuche gezeigt haben, aus rohrgleichem oder rohrähnlichem Werkstoff, einem Schaumstoff, einem Vlies oder aus einem aus Vlies und Schaumstoff gebildeten Gewebeverbund bestehen. Selbstverständlich ist es möglich, am Rohr mehrere Längsstreifen mit solchen Unterlagen vorzusehen, oder sogar über der gesamten Rohroberfläche anzuordnen. Als Streifenmaterial kommt Aluminium, Kupfer und Messing in Band, Folien und Gewebeform in Frage.

In der Zeichnung ist der Erfindungsgegenstand beispielsweise rein schematisch dargestellt und zwar zeigen
- Fig. 1: das Ende eines Kunststoffrohres vor dem Einschieben in die angedeutete Schweißmuffe im Vertikalschnitt und
- Fig. 2: eine gegenüber diesem Schnitt um 90° verdrehte Ansicht.

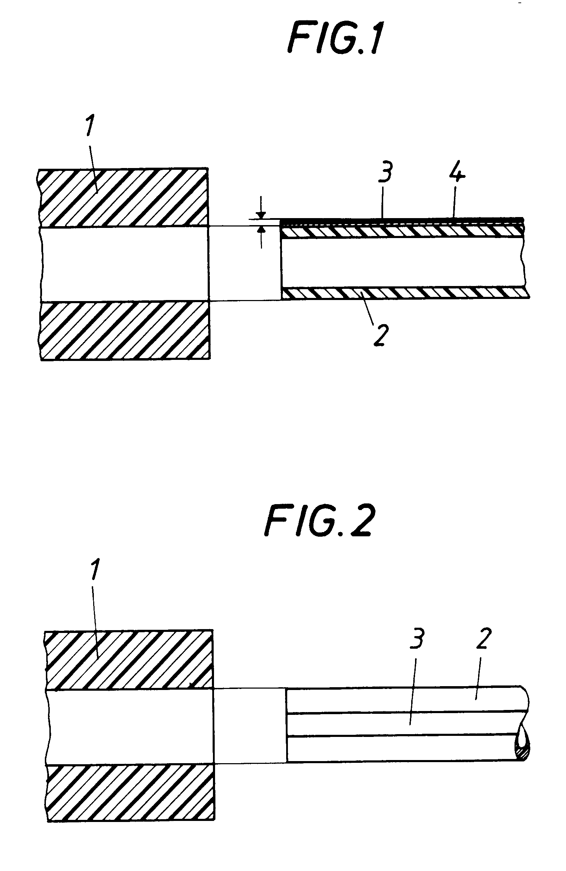

Mit 1 ist die Heizmuffe einer üblichen Vorrichtung zur Fusionsschweißung bezeichnet. Das Ende des Kunststoffrohres 2 soll in dieser Heizmuffe 1 soweit erhitzt werden, daß es sich mit einer innenseitig ebenfalls aufgeheizten Muffe verschweißen läßt. Wie ersichtlich, weist das Kunststoffrohr 2 einen Metallstreifen 3 auf, der von der Rohroberfläche durch eine Unterlage 4 distanziert ist. Im in Fig. 1 sichtbaren Streifenbereich ist der Gesamtdurchmesser des Kunststoffrohres 2 beträchtlich größer als der Innendurchmesser der Heizmuffe 1, so daß beim Einschieben des Rohrendes in die Heizmuffe 1 die Unterlage 4 samt dem Metallstreifen 3 zurückgeschoben bzw. abgeschert wird und eine Erhitzung der gesamten Rohrinnenfläche zur späteren Verschweißung erfolgt.

## Patentansprüche

1. Schweißbares Kunststoffrohr (2), insbesondere für Gas- und Flüssigkeitsleitungen, das oberflächlich zumindest einen elektrophysikalisch ortbaren Längsstreifen (3), vorzugsweise aus Metall, aufweist, wobei der Längsstreifen (3) von der Rohroberfläche durch eine Unterlage (4) distanziert ist, dadurch gekennzeichnet, daß die Dicke der Unterlage (4) mindestens 0,5 mm, vorzugsweise 2 bis 3 mm, beträgt, so daß der Gesamtdurchmesser des Kunststoffrohres (2, 3, 4) im Bereich dieses Längsstreifens (3) den Innendurchmesser einer Heizmuffe (1) zur nachfolgenden Fusionsschweißung übersteigt.

2. Kunststoffrohr nach Anspruch 1, dadurch gekennzeichnet, daß die Unterlage (4) aus rohrgleichem oder rohrähnlichem Werkstoff, einem Schaumstoff, einem Vlies oder aus einem aus Vlies und Schaumstoff gebildeten Gewebeverbund besteht.

## Claims

1. A weldable plastic pipe (2), more particularly for pipes conveying gases and liquids, provided on its surface with at least one electrophysically locatable longitudinal strip (3), preferably of metal, the longitudinal strip (3) being spaced apart from the pipe surface by an underlay (4), characterised in that the thickness of the underlay (4) is at least 0.5 mm, preferably 2 to 3 mm, so that the total diameter of the plastic pipe (2, 3, 4) in the region of the longitudinal strip (3) exceeds the inside diameter of a heating muffle (1) for subsequent fusion welding.

2. A plastic pipe according to claim 1, characterised in that the underlay (4) is made of the same or similar material to the pipe or of a foamed plastic or non-woven or a composite fabric made up of non-woven and foamed plastic.

## Revendications

1. Tuyau en matière plastique (2) soudable, en particulier pour des conduites à gaz et à liquide, qui présente en surface au moins une bande longitudinale (3) pouvant être localisée par voie électrophysique, de préférence en métal, la bande longitudinale (3) étant espacée de la surface du tube, au moyen d'une sous-couche (4), caractérisé en ce que l'épaisseur de la sous-couche (4) est d'au moins 0,5 mm, de préférence de 2 à 3 mm, si bien que le diamètre global du tuyau en matière plastique (2, 3, 4) dépasse, dans la zone de cette bande longitudinale (3), le diamètre intérieur d'un manchon chauffant (1) destiné à effectuer subséquemment une soudure par fusion.

2. Tuyau en matière plastique selon la revendication 1, caractérisé en ce que la sous-couche (4) est constituée d'un matériau formé d'un tube identique ou bien d'un tube analogue, d'un matériau alvéolaire, d'un matelas de fibres, ou bien d'un composite textile constitué de matelas de fibres et de matériau alvéolaire.
